# EUROPÄISCHE PATENTSCHRIFT

(11) **EP 0 781 318 B1**
(45) Veröffentlichungstag und Bekanntmachung des Hinweises auf die Patenterteilung: **08.12.1999**
(21) Anmeldenummer: 95931962.5
(22) Anmeldetag: 01.09.1995
(51) Int. Cl.: C11D 1/37, C11D 1/14, B01F 17/02

(54) **WASSERFREIE TENSIDGEMISCHE**
ANHYDROUS SURFACTANT MIXTURES
MELANGES D'AGENTS TENSIOACTIFS ANHYDRES

(30) Priorität: 12.09.1994 DE 4432365
(43) Veröffentlichungstag der Anmeldung: 02.07.1997
(73) Patentinhaber: Henkel Kommanditgesellschaft auf Aktien, 40191 Düsseldorf (DE)
(72) Erfinder: BREUCKER, Christoph, D-42781 Haan (DE); KOMP, Horst, Dieter, D-40764 Langenfeld (DE); SALZ, Rainer, D-40589 Düsseldorf (DE); SCHAMBIL, Fred, D-40789 Monheim (DE); SCHMID, Karl, D-40822 Mettmann (DE)
(86) Internationale Anmeldenummer: EP9503437
(87) Internationale Veröffentlichungsnummer: WO9608550

(56) Entgegenhaltungen:
- EP-A- 0 342 917
- WO-A-95/29981
- DE-A- 2 105 910
- FR-A- 1 272 396

## Beschreibung

### Gebiet der Erfindung

Die Erfindung betrifft die Verwendung von wasserfreien Tensidgemischen mit einem verminderten Reizpotential, enthaltend lang- und kurzkettige Fettalkoholsulfate in ausgewählten Mischungsverhältnissen zur Herstellung von oberflächenaktiven Mitteln.

### Stand der Technik

Fettalkoholsulfate stellen wegen ihren guten anwendungstechnischen Eigenschaften und ihrer ausgezeichneten ökologischen Verträglichkeit Aniontenside dar, die in zunehmendem Maße für die Herstellung von Wasch-, Spül- und Reinigungsmitteln an Bedeutung gewinnen.

Für Lagerung und Transport sind naturgemäß möglichst hoch konzentrierte wäßrige bzw. wasserfreie, feste Anbietungsformen anionischer Tenside erwünscht. Diese haben jedoch den Nachteil, im Gegensatz zu den auf die Anwendungskonzentration verdünnten Produkten als stark haut- bzw. schleimhautreizend gekennzeichnet werden zu müssen, was im Hinblick auf das Inverkehrbringen erhöhte Anforderungen an die Arbeitssicherheit stellt.

Aus der Europäischen Patentanmeldung **EP 0342917 A2** (Unilever) ist der Einsatz von Gemischen von Fettalkoholsulfaten auf Basis von Talg- und Kokosalkohol im Gewichtsverhältnis 9 : 4 bis 1 : 6 zur Herstellung von Waschmitteln mit verbesserten Detergenseigenschaften bekannt. Im einzelnen werden Gemische von C_{16/18}-Talgalkoholsulfat und C_{12/14}-Kokosalkoholsulfat im Gewichtsverhältnis von 60 : 40 und 40 : 60 beschrieben. Die Schrift enthält keinen Hinweis auf das Reizpotential der darin beschriebenen Gemische.

Die Deutsche Offenlegungsschrift **DE-A-2105910** sowie die Französische Offenlegungsschrift **FR-A-1272396** offenbaren Mischungen von Fettalkoholsulfaten mit 12 bzw. 14 Kohlenstoffatomen und 16 bzw. 18 Kohlenstoffatomen und deren Verwendung in oberflächenaktiven Zubereitungen. Jedoch handelt es sich stets entweder um wasserhaltige Sulfatmischungen oder um wasserhaltige Anwendungsprodukte. Die Schriften enthalten zudem keine Hinweise auf das Reizpotential der Fettalkoholsulfatmischungen.

In der älteren Internationalen Anmeldung **WO-A-95/29981** werden heterogene Tensidgranulate beschrieben, die aus einem inneren Korn und einem Überzug aufgebaut sind. Das innere Korn kann Mischungen aus C_{16/18}-Alkylsulfaten und C_{12/14}-Alkylsulfaten enthalten und wird stets umhüllt von einem Überzug von C_{12/14}-Alkylsulfaten. Gemäß dieser Schrift ist gerade der Aufbau als heterogene Tensidgranulate erfindungswesentlich.

Die Aufgabe der Erfindung hat indes darin bestanden, neue wasserfreie Tensidgemische auf Basis von Fettalkoholsulfaten zur Verfügung zu stellen, die sich durch ein signifikant vermindertes Reizpotential auszeichnen.

### Beschreibung der Erfindung

Gegenstand der Erfindung ist die Verwendung von wasserfreien Tensidgemischen mit vermindertem Reizpotential, enthaltend
(a) Fettalkoholsulfate der Formel **(I),**

   R¹O-SO₃X (I)

   in der R¹ für einen Alkyl- und Alkenylrest mit 16 bis 18 Kohlenstoffatomen und X für ein Alkali- und/oder Erdalkalimetall, Ammonium, Alkylammonium, Alkanolammonium oder Glucammonium steht, und
(b) Fettalkoholsulfate der Formel **(II)**,

   R²O-SO₃X (II)

   in der R¹ für einen Alkyl- und Alkenylrest mit 12 bis 14 Kohlenstoffatomen und X wiederum für ein Alkali- und/oder Erdalkalimetall, Ammonium, Alkylammonium, Alkanolammonium oder Glucammonium steht,
im Gewichtsverhältnis von 70 : 30 bis 90 : 10 und vorzugsweise 75 : 25 bis 80 : 20, wobei diese nicht in Form heterogener Tensidgranulate bestehend aus innerem Korn und einem Überzug vorliegen, zur Herstellung von Wasch-, Spül- und Reinigungsmitteln.

Obgleich bekannt war, daß Mischungen von Fettalkoholsulfaten auf Basis von Talg- und Kokosalkohol typischerweise im Gewichtsverhältnis 60 : 40 sehr gute Detergenseigenschaften aufweisen, wurde überraschenderweise innerhalb eines sehr kleinen, bislang noch nicht offenbarten Mischungsbereiches eine synergistische Abnahme des Reizpotentials bei gleichermaßen sehr guten anwendungstechnischen Eigenschaften gefunden.

### Fettalkoholsulfate

Fettalkoholsulfate stellen bekannte anionische Tenside dar und werden üblicherweise durch Umsetzung von Fettalkoholen mit Sulfatierungsmitteln wie Schwefelsäure, Oleum, Chlorsulfonsäure und insbesondere gasförmigem Schwefeltrioxid hergestellt. Die resultierenden Schwefelsäurehalbester werden anschließend mit geeigneten Basen neutralisiert.

Im Sinne der Erfindung sind unter den Fettalkoholsulfaten der Formel (I) Sulfatierungsprodukte von Fettalkoholen mit 16 bis 18 Kohlenstoffatomen zu verstehen. Typische Beispiele sind die Sulfate von Cetylalkohol, Stearylalkohol und/oder Oleylalkohol. Vorzugsweise kommen technische Fettalkoholschnitte wie beispielsweise Talgalkohol in Betracht, die in untergeordneten Mengen noch kürzer- oder längerkettige Homologe aufweisen können. Es ist ferner möglich, technische Fettalkoholschnitte in solcher Weise abzumischen, daß ein Alkoholgemisch mit einem Schwerpunkt der C-Kettenverteilung im Bereich von 16 bis 18 Kohlenstoffatomen resultiert. Dies ist beispielsweise dann vorteilhaft, wenn man den Anteil an pflanzlichen Alkoholen im Gemisch möglichst hoch einstellen will.

Im Sinne der Erfindung sind weiterhin unter den Fettalkoholsulfaten der Formel (II) Sulfatierungsprodukte von Fettalkoholen mit 12 bis 14 Kohlenstoffatomen zu verstehen. Typische Beispiele sind hier Laurylalkohol und Myristylalkohol. Vorzugsweise kommen auch hier technische Fettalkoholschnitte wie beispielsweise Kokos- oder Palmkernalkohol in Frage, die ebenfalls wieder Anteile an kürzer- und längerkettigen Homologen in untergeordneten Mengen enthalten können.

### Mischung der Fettalkoholsulfatkomponenten

Das Vermischen der Fettalkoholsulfatkomponenten ist unkritisch. Im einfachsten Fall werden die nach der Neutralisation der rohen Sulfatierungsprodukte resultierenden wäßrigen Pasten beispielsweise in einem Schugi-Mischer vermischt und gleichzeitig zu einem wasserfreien, stückigen Produkt verarbeitet. In gleicher Weise können auch trockenneutralisierte bzw. sprüh- oder heißdampfgetrocknete Pulver der beiden Komponenten ausgemischt werden. Weiterhin ist es möglich, eine entsprechende Fettalkoholmischung herzustellen und das gewünschte Aniontensidgemisch in situ durch Co-Sulfatierung, Neutralisation und gegebenenfalls Trocknung herzustellen. Schließlich können die sauren Sulfatierungsprodukte auch gemeinsam neutralisiert und dann weiterverarbeitet werden.

In einer bevorzugten Ausführungsform der Erfindung geht man von einem nach konventionellen Verfahren hergestelltem Turmpulver aus, das neben typischen Waschmittelbestandteilen auch gewünschtenfalls eine der beiden Fettalkoholsulfatkomponenten enthalten kann. Das Pulver wird in einem Mischer vorgelegt und kontinuierlich mit mindestens einer der beiden Fettalkoholsulfatkomponenten, vorzugsweise in Form einer wäßrigen Paste versetzt, gemischt, getrocknet und gegebenenfalls weiter mechanisch verfestigt. Es resultiert ein trockenes Waschmittelpulver, -granulat oder -extrudat mit ausgezeichneten Detergenseigenschaften, hoher Auflösungsgeschwindigkeit und verminderten Reizpotential.

### Gewerbliche Anwendbarkeit

Die Tensidgemische zeichnen sich nicht nur durch sehr gute Detergenseigenschaften, sondern vor allem auch durch ein in synergistischer Weise vermindertes Reizpotential, d.h. verbesserte Haut- und Augenschleimhautverträglichkeit aus. Sie eignen sich daher zur Herstellung von Wasch-, Spül- und Reinigungsmitteln, insbesondere festen Waschmitteln, in denen sie in Mengen von 1 bis 90, vorzugsweise 10 bis 50 Gew.-% - bezogen auf die Mittel - enthalten sein können.

### Beispiele

### I. Eingesetzte Tenside

A) C_{16/18}-Talgalkoholsulfat-Natriumsalz, Pulver
B) C_{12/14}-Kokosalkoholsulfat-Natriumsalz, Pulver

### II. Beurteilung des Reizpotentials

Die Bestimmung des Reizpotentials erfolgte gemäß der OECD-Methode No. 404 und der EEC Directive 84/449 EEC, Pt.B.4. Die angegebenen Reizsummenscores wurden aus den nach 24, 48 und 72 Stunden erhaltenen Reizscores gebildet. Dabei wurde der im Vergleichsversuch V1 ermittelte Reizsummenscore für ein 100 %iges C_{16/18}-Talgalkoholsulfat-Natriumsalz zu 100 % gesetzt und die in den übrigen Versuchen erhaltenen Reizsummenscores zu diesem ins Verhältnis gesetzt. Die Ergebnisse sind in Tabelle 1 zusammengefaßt (Prozentangaben als Gew.-%).

**Tabelle 1**

| **Reizsummenscores** | | | |
|---|---|---|---|
| **Bsp.** | **[A] %** | **[B] %** | **Reizsummenscore %-rel** |
| 1 | 75 | 25 | 35 |
| 2 | 80 | 20 | 30 |
| 3 | 85 | 15 | 35 |
| 4 | 90 | 10 | 35 |
| V1 | 100 | 0 | 100 |
| V2 | 60 | 40 | 95 |
| V3 | 40 | 60 | 90 |
| V4 | 20 | 80 | 80 |
| V5 | 0 | 100 | 70 |

## Patentansprüche

1. Verwendung von wasserfreien Tensidgemischen mit vermindertem Reizpotential, enthaltend
(c) Fettalkoholsulfate der Formel (**I**),
R¹O-SO₃X (I)
in der R¹ für einen Alkyl- und Alkenylrest mit 16 bis 18 Kohlenstoffatomen und X für ein Alkali- und/oder Erdalkalimetall, Ammonium, Alkylammonium, Alkanolammonium oder Glucammonium steht, und
(d) Fettalkoholsulfate der Formel (**II**),
R²O-SO₃X (II)
in der R¹ für einen Alkyl- und Alkenylrest mit 12 bis 14 Kohlenstoffatomen und X wiederum für ein Alkali- und/oder Erdalkalimetall, Ammonium, Alkylammonium, Alkanolammonium oder Glucammonium steht,
im Gewichtsverhältnis von 70 : 30 bis 90 : 10, wobei diese nicht in Form heterogener Tensdigranulate bestehend aus innerem Korn und einem Überzug vorliegen, zur Herstellung von Wasch-, Spül- und Reinigungsmitteln.

2. Verwendung nach Anspruch 1, dadurch gekennzeichnet, daß Tensidgemische verwendet werden, die die Komponenten (a) und (b) im Gewichtsverhältnis von 75 : 25 bis 80 : 20 enthalten.

## Claims

1. The use of water-free surfactant mixtures with a reduced irritation potential containing
(c) fatty alcohol sulfates corresponding to formula (I):
R¹O-SO₃X (I)
in which R¹ is an alkyl and alkenyl group containing 16 to 18 carbon atoms and X is an alkali and/or alkaline-earth metal, ammonium, alkylammonium, alkanolammonium or glucammonium, and
(d) fatty alcohol sulfates corresponding to formula (II):
R²O-SO₃X (II)
in which R² is an alkyl and alkenyl group containing 12 to 14 carbon atoms and X is again an alkali and/or alkaline-earth metal, ammonium, alkylammonium, alkanolammonium or glucammonium,
in a ratio by weight of 70:30 to 90:10, these mixtures not being present in the form of heterogeneous surfactant granules consisting of an inner core and a coating, for the production of laundry detergents, dishwashing detergents and cleaners.

2. The use claimed in claim 1, characterized in that surfactant mixtures containing components (a) and (b) in a ratio by weight of 75:25 to 80:20 are used.

## Revendications

1. Utilisation de mélanges d'agents tensioactifs anhydres à potentiel irritant réduit contenant
(b) des sulfates d'alcools gras de formule (**I**),
R¹O-SO₃X (I)
dans laquelle R¹ représente un radical alkyle ou alkylène ayant de 16 à 18 atomes de carbone et X représente un métal alcalin et/ou alcalino-terreux, l'ammonium, un alkylammonium, un alcanol ammonium ou le glucammonium, et
(c) des sulfates d'alcools gras de formule (**II**),
R²O-SO₃X (II)
dans laquelle R² représente un radical alkyle ou alcényle ayant de 12 à 14 atomes de carbone et X représente à nouveau un métal alcalin et/ou alcalino-terreux, l'ammonium, un alkylammonium, un alcanol ammonium ou le glucammonium, dans un rapport pondéral de 70:30 à 90:10, ces mélanges qui ne sont pas sous forme de granulés hétérogène d'agents tensioactifs étant constitués d'un noyau interne et d'un revêtement, pour la fabrication de détergents, de produits de rinçage et de nettoyage.

2. Utilisation selon la revendication 1,
caractérisée en ce qu'
on utilise des mélanges tensioactifs qui contiennent les composants (a) et (b) dans un rapport pondéral de 75:25 à 80:20.
